# EUROPÄISCHE PATENTSCHRIFT

(11) **EP 3 331 664 B1**
(45) Veröffentlichungstag und Bekanntmachung des Hinweises auf die Patenterteilung: **12.05.2021**
(21) Anmeldenummer: 16766836.7
(22) Anmeldetag: 02.08.2016
(51) Int. Cl.: B25B 5/06, B25B 5/16

(54) **ZENTRIERSPANNVORRICHTUNG**
CENTRING CLAMPING APPARATUS
DISPOSITIF DE FIXATION AVEC CENTRAGE

(30) Priorität: 03.08.2015 DE 102015112686
(43) Veröffentlichungstag der Anmeldung: 13.06.2018
(73) Patentinhaber: DESTACO Europe GmbH, 61440 Oberursel (DE)
(72) Erfinder: NEBEL, Andreas, 63933 Mönchberg (DE)
(74) Vertreter: Wolf, Michael
(86) Internationale Anmeldenummer: PCT/DE2016/100352
(87) Internationale Veröffentlichungsnummer: WO 2017/020891

(56) Entgegenhaltungen:
- EP-A1- 0 894 572
- DE-U1- 29 718 643
- FR-A1- 2 779 369
- FR-A1- 2 853 847
- US-A1- 2007 069 439
- US-A1- 2008 315 478

## Beschreibung

Die Erfindung betrifft eine Zentrierspannvorrichtung gemäß dem Oberbegriff des Patentanspruchs 1.

Eine Zentrierspannvorrichtung der eingangs genannten Art ist aus der EP 0 894 572 A1 bekannt. Diese Zentrierspannvorrichtung besteht aus einem Gehäuse, in dem ein Zentrierelement zwischen einer Öffnungsstellung und einer Spannstellung entlang einer Längsachse verschieblich gelagert ist, wobei am Zentrierelement ein quer zur Längsachse zwischen einer eingefahrenen und einer ausgefahrenen Position verschieblich gelagertes Fingerelement vorgesehen ist, wobei das Fingerelement mit einem im Zentrierelement verschieblich gelagerten Stellglied wirkverbunden ist. Die obige Maßgabe, dass ein Fingerelement vorgesehen ist, bedeutet im Rahmen der hier beschriebenen Erfindung, dass stets mindestens ein Fingerelement vorgesehen ist, wobei tatsächlich bei der oben beschriebenen Lösung und auch bei einer bevorzugten Ausführungsform der noch zu erläuternden Erfindung zwei Fingerelemente vorgesehen sind.

Der Erfindung liegt die Aufgabe zugrunde, eine Zentrierspannvorrichtung der eingangs genannten Art zu verbessern. Insbesondere soll eine Zentrierspannvorrichtung mit einem bezüglich des Zusammenspiels von Zentrierelement und Fingerelement genau koordinierten Bewegungsablauf geschaffen werden.

Diese Aufgabe ist mit einer Zentrierspannvorrichtung der eingangs genannten Art durch die im Patentanspruch 1 aufgeführten Merkmale gelöst.

Nach der Erfindung ist also vorgesehen, dass am Zentrierelement eine entweder bei vollständig eingefahrenem Fingerelement eine Relativbewegung zwischen dem Gehäuse und dem Zentrierelement oder bei vollständig ausgefahrenem Fingerelement eine Relativbewegung zwischen dem Zentrierelement und dem Stellglied ausschließende Blockiereinrichtung vorgesehen ist.

Mit anderen Worten zeichnet sich die erfindungsgemäße Zentrierspannvorrichtung somit dadurch aus, dass mit Hilfe der Blockiereinrichtung gewährleistet wird, dass in bestimmten Situationen entweder eine Relativbewegung zwischen dem Zentrierelement und dem Gehäuse oder eine Relativbewegung zwischen dem Zentrierelement und dem Stellglied ausgeschlossen wird. Etwas genauer betrachtet, ist insbesondere vorgesehen, dass immer dann, wenn das Fingerelement vollständig in das Zentrierelement eingefahren ist, eine Relativbewegung zwischen dem Zentrierelement und dem Gehäuse ausgeschlossen ist, was zur Folge hat, dass eine Bewegung des Stellgliedes zunächst ausschließlich das Ausfahren des Fingerelements bewirkt. Ist dann das Fingerelement ausgefahren, führt eine weitere Bewegung des Stellgliedes zu einer Bewegung des Zentrierelements in Bezug auf das Gehäuse. Außerdem ist gleichzeitig vorgesehen, dass immer dann, wenn das Fingerelement vollständig ausgefahren ist, eine Relativbewegung zwischen dem Zentrierelement und Stellglied ausgeschlossen ist, was zur Folge hat, dass eine Bewegung des Stellgliedes zunächst ausschließlich das Verfahren bzw. Ausfahren des Zentrierelements bewirkt. Ist dann das Zentrierelement ausgefahren, führt eine weitere Bewegung des Stellgliedes zu einer Bewegung des Fingerelements in Bezug auf das Zentrierelement.

Die oben genannte Öffnungsstellung ist dabei die Stellung, bei der sich das Zentrierelement in einer ausgefahrenen, "oberen" Position und das Fingerelement in der eingefahrenen Position ("innerhalb" des Zentrierelements) befindet. Die oben genannte Spannstellung ist dabei die Stellung, bei der sich das Zentrierelement in einer eingefahrenen, "unteren" Position und das Fingerelement in einer ausgefahrenen Position ("außerhalb" des Zentrierelements) befindet. Der erfindungsgemäße Bewegungsablauf ist also - ausgehend von der Öffnungsstellung - dadurch gekennzeichnet, dass eine Bewegung des Stellgliedes (nach "unten") zunächst zum Ausfahren des Fingerelements führt. Ist dieses ausgefahren, führt die weitere Bewegung des Stellgliedes zu einer Bewegung des Zentrierelements (nach "unten"), und zwar bis die Spannstellung erreicht ist, das Werkstück also zwischen dem Fingerelement und dem Gehäuse der Spannvorrichtung fest eingespannt ist. Soll nun zu einem anderen Zeitpunkt die Spannstellung wieder gelöst werden, führt eine Bewegung des Stellgliedes (nach "oben") zunächst zu einer Bewegung des Zentrierelements (nach "oben"), wobei das Fingerelement dabei nach wie vor ausgefahren ist. Spätestens wenn das Zentrierelement die ausgefahrene, "obere" Position erreicht hat, führt eine weitere Bewegung des Stellgliedes zum Einfahren des Fingerelements, also einer Stellung der Spannvorrichtung, bei der das Werkstück vom Zentrierelement entfernt werden kann.

Wie aus obigen Erläuterungen folgt, führt der Einsatz der erfindungsgemäßen Blockiereinrichtung somit zu einer verbesserten Koordination der Bewegungsabläufe, was sich insbesondere zum Beispiel (hierauf wird unten noch genauer eingegangen) bei Blechen mit Zentrierlöchern, deren Ränder hochstehend ausgebildet sind, sehr vorteilhaft auswirkt, da bei diesen ein bei den bisherigen Spannvorrichtung auftretendes Verklemmen des Fingerelements mit dem Blech vermieden werden kann.

Andere vorteilhafte Weiterbildungen der erfindungsgemäßen Zentrierspannvorrichtung ergeben sich aus den abhängigen Patentansprüchen.

Der Vollständigkeit halber wird noch auf die Dokumente US 2016/0129558 A1 und EP 1 830 983 B1 und EP 2 164 677 B1 hingewiesen.

Die erfindungsgemäße Zentrierspannvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: teilweise geschnitten die erfindungsgemäße Zentrierspannvorrichtung in Spannstellung mit ausgefahrenen, umgekehrt hakenförmigen Fingerelementen;
- Figur 2: perspektivisch und teilweise geschnitten die Kulissenführung im Kopf des Zentrierelements zur Betätigung der umgekehrt hakenförmigen Fingerelemente mit dem Stellglied;
- Figur 3: perspektivisch die Zentrierspannvorrichtung gemäß Figur 1; und
- Figur 4 bis 11: die erfindungsgemäße Zentrierspannvorrichtung gemäß Figur 1 größtenteils im Schnitt in unterschiedlichen Stellungen, wobei Figur 4 die Öffnungsstellung, Figur 8 die Spannstellung und die übrigen Figuren entsprechende Zwischenstellungen zeigen.

Die in den Figuren dargestellte Zentrierspannvorrichtung besteht in an sich bekannter Weise zunächst aus einem Gehäuse 1, in dem ein vorzugsweise mindestens teilweise hohlzylindrisches Zentrierelement 2 zwischen einer Öffnungsstellung und einer Spannstellung entlang einer Längsachse verschieblich gelagert ist, wobei am Zentrierelement 2 ein quer bzw. senkrecht zur Längsachse zwischen einer eingefahrenen und einer ausgefahrenen Position verschieblich gelagertes Fingerelement 3 vorgesehen ist, wobei das Fingerelement 3 mit einem im Zentrierelement 2 verschieblich gelagerten, vorzugsweise zylindrisch ausgebildeten Stellglied 4 wirkverbunden ist.

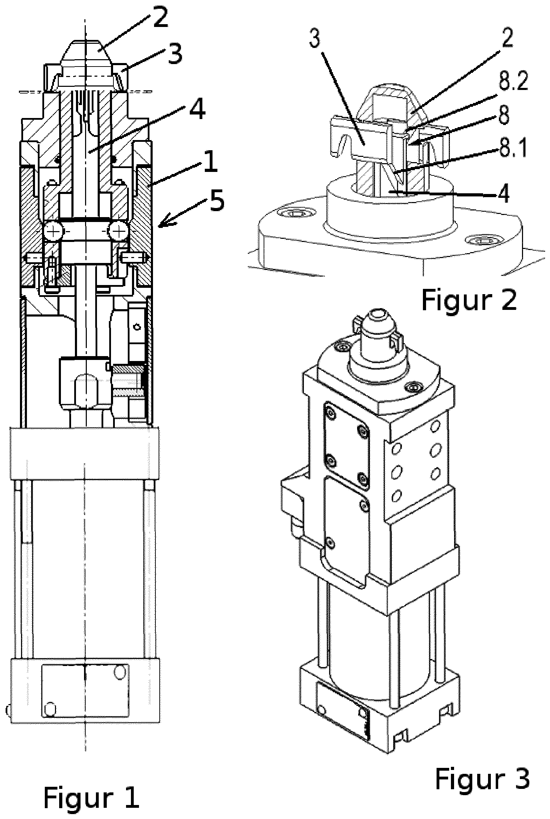

Wie oben bereits erwähnt, ist die Maßgabe "ein" Fingerelement 3 so zu verstehen, dass "mindestens ein" Fingerelement gemeint ist, wobei die dargestellten Ausführungsformen jeweils zwei Fingerelemente zeigen. Zur Betätigung des Fingerelements 3 ist dabei in an sich bekannter Weise vorgesehen, dass zwischen dem Fingerelement 3 und dem Stellglied 4 eine Kulissenführung 8 angeordnet ist. Wie sich aus Figur 2 ergibt, ist diese aus einem schräg zur Längsachse verlaufenden Schlitz 8.2, Nut oder dergleichen am Fingerelement 3 und aus einem im Schlitz 8.2 geführten passfederartigen Element 8.1, Zapfen oder dergleichen am Stellglied 4 oder umgekehrt gebildet. Wird also das Stellglied 4 in Figur 2 nach oben verschoben, führt dies dazu, dass das Fingerelement 3 eingefahren wird, und umgekehrt.

Wesentlich für die erfindungsgemäße Zentrierspannvorrichtung ist nun, dass am Zentrierelement 2 eine entweder bei vollständig eingefahrenem Fingerelement 3 eine Relativbewegung zwischen dem Gehäuse 1 und dem Zentrierelement 2 oder bei vollständig ausgefahrenem Fingerelement 3 eine Relativbewegung zwischen dem Zentrierelement 2 und dem Stellglied 4 ausschließende Blockiereinrichtung 5 vorgesehen ist. Wie bereits erläutert, stellt diese Maßgabe sicher, dass eine Kollision zwischen dem Fingerelement 3 und dem einen nach oben stehenden Kragen 9.1 aufweisenden Werkstück 9 vermieden wird, da erfindungsgemäß dafür gesorgt ist, dass das Einfahren und Ausfahren des Fingerelements 3 immer erst in mindestens teilweise ausgefahrener Position des Zentrierelements 2 erfolgt, also dann, wenn das Fingerelement 3 keinen Kontakt mehr zum Werkstück 9 hat.

Bezüglich der vorgenannten, einerseits mit dem Gehäuse 1 und andererseits mit dem Stellglied 4 zusammenwirkenden und am Zentrierelement 2 angeordneten Blockiereinrichtung 5 ist dabei besonders bevorzugt vorgesehen, dass diese ein quer zur Längsachse verschiebbares Blockierelement 5.1 umfasst. Es können dabei, wie dargestellt, auch zwei und mehr dieser Blockierelemente 5.1 vorgesehen sein. Besonders bevorzugt ist vorgesehen, dass das Blockierelement 5.1 als mindestens in eine Raumrichtung einen kreisförmigen Querschnitt aufweisender Körper ausgebildet ist. Ist der Körper als zylinderischer Bolzen ausgebildet, so weist er entsprechend in genau eine Raumrichtung einen kreisförmigen Querschnitt bzw. eine zylindrische Außenkontur auf. Diese Ausführungsform ist nachfolgend nicht extra dargestellt, aber durchaus auch realisierbar und funktionstüchtig. Ist das Blockierelement 5.1, was bevorzugt und dargestellt ist, als Kugel ausgebildet, so hat es in alle Raumrichtungen einen kreisförmigen Querschnitt bzw. eine kugelige Oberfläche.

Unabhängig von der tatsächlichen äußeren Form des Blockierelements 5.1 ist weiterhin, wie ersichtlich, besonders bevorzugt vorgesehen, dass dieses frei von in seinen Körper eingreifenden Führungselementen ausgebildet ist.

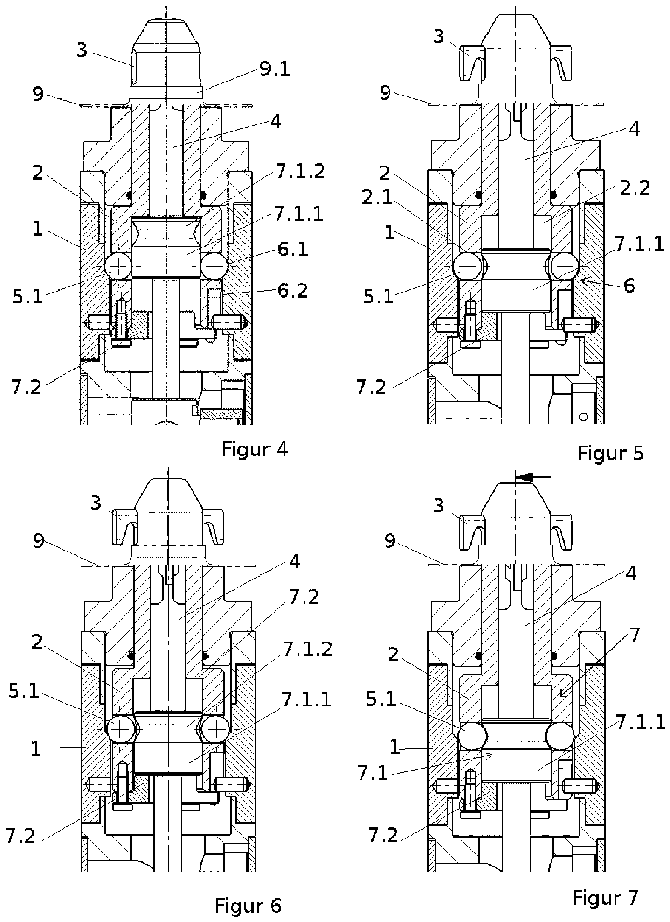

Zur Realisierung der genannten Verschieblichkeit ist dabei am Zentrierelement 2 eine Führung 2.1 für das Blockierelement 5.1 vorgesehen, wobei weiterhin besonders bevorzugt vorgesehen ist, dass eine bzw. die Länge der Führung 2.1 quer zur Längsachse gesehen kürzer als eine entsprechende Länge bzw. als ein entsprechender Durchmesser des Blockierelements 5.1 ausgebildet ist. Diese Maßgabe führt, wie insbesondere aus den Figuren 4 bis 11 ersichtlich, dazu, dass das Blockierelement 5.1 stets mindestens entweder in Kontakt mit dem Gehäuse 1 oder mit dem Stellglied 4 steht.

In diesem Zusammenhang ist dabei weiterhin besonders bevorzugt am Gehäuse 1 eine vorzugsweise parallel zur Längsachse verlaufende und vorzugsweise zwei Bahnabschnitte 6.1, 6.2 aufweisende Führungsbahn 6 für das Blockierelement 5.1 vorgesehen, wobei vorzugsweise (je nach Stellung) entweder das mit dem einen Bahnabschnitt 6.1 in Kontakt stehende Blockierelement 5.1 eine Relativbewegung zwischen dem Zentrierelement 2 und dem Stellglied 4 zulassend oder das mit dem anderen Bahnabschnitt 6.2 in Kontakt stehende Blockierelement 5.1 eine solche Bewegung verhindernd ausgebildet ist.

Weiterhin ist, wie bereits aus dem vorgenannten Stand der Technik bekannt, zur beidseitigen Begrenzung der Verschieblichkeit des Stellgliedes 4 zum Zentrierelement 2 eine Anschlagseinrichtung 7 vorgesehen, die aus einem am Stellglied 4 angeordneten Anschlagselement 7.1 und beidseitig des Anschlagselements 7.1 (ober- und unterhalb) am Zentrierelement 2 angeordneten Widerlagern 7.2 gebildet ist. Dabei ist ferner ein parallel zur Längsachse vorhandener Abstand zwischen den beiden Widerlagern 7.2 größer als eine parallel zur Längsachse vorhandene Erstreckung des Anschlagselements 7.1 ausgebildet. Außerdem ist, um die Vorrichtung einfach montieren zu können, das eine Widerlager 7.2 fest, aber lösbar mit dem Zentrierelement 2 verbunden ausgebildet. Ferner ist bevorzugt vorgesehen, dass das Zentrierelement 2 zur Führung des Anschlagselements einen zylindrischen Führungsraum 2.2 aufweist, wobei weiterhin die beiden Widerlager 7.2 vorzugsweise jeweils einen Wandbereich des Führungsraums 2.2 bilden.

Eine weitere bevorzugte Besonderheit der erfindungsgemäßen Lösung besteht ferner darin, dass das Blockierelement 5.1 mit dem (aus dem oben genannten Stand der Technik bekannten) Anschlagselement 7.1 zusammenwirkend ausgebildet ist. Dabei ist weiterhin besonders bevorzugt vorgesehen, dass das Anschlagselement 7.1 in Richtung der Längsachse gesehen zwei Abschnitte 7.1.1, 7.1.2 aufweist.

Noch etwas genauer betrachtet, ist vorgesehen, dass der erste Abschnitt 7.1.1 eine zum Führungsraum 2.2 passende zylindrische Außenkontur aufweist. In anderen Worten ausgedrückt, bedeutet dies, dass der erste Abschnitt 7.1.1 zum Heraushalten des Blockierelements 5.1 aus dem Führungsraum 2.2 ausgebildet ist.

Schließlich ist noch besonders bevorzugt vorgesehen, dass der zweite Abschnitt 7.1.2 als Hyperboloid ausgebildet ist, wobei vorzugsweise ein größter Durchmesser des Hyperboloiden dem Durchmesser des ersten Abschnitts 7.1.1 entspricht, wobei außerdem die Rotationsachse des Hyperboloiden mit der Längsachse des Zentrierelements zusammen fällt. Nochmals in anderen Worten ausgedrückt, ist vorgesehen, dass der zweite Abschnitt 7.1.2 als Führungskurve für das Blockierelement 5.1 ausgebildet ist, wobei der Übergang vom ersten zum zweiten Abschnitt damit zwar nicht stetig (im mathematischen Sinne), aber sprungfrei ausgebildet ist. Die einen kreisförmigen Querschnitt aufweisenden Körper bzw. Kugeln können also gut am Anschlagselement 7.1 entlang gleiten.

Die erfindungsgemäße Zentrierspannvorrichtung funktioniert, wie folgt: Ausgangspunkt der Erläuterung ist Figur 4. Dort ist die erfindungsgemäße Zentrierspannvorrichtung in Öffnungsstellung mit aufgelegtem Werkstück 9 (ein Blech mit einer runden Öffnung und einem Kragen 9.1 um die Öffnung) gezeigt. Das Stellglied 4 befindet sich in seiner höchsten Position, wobei der Abschnitt 7.1.1 des Anschlagselements 7.1 das Blockierelement 5.1 nach außen gegen den Bahnabschnitt 6.2 presst und damit eine Relativbewegung (nach unten) zwischen dem Gehäuse 1 und dem Zentrierelements 2 verhindert (nach oben wird eine solche durch geeignete Schultern am Gehäuse 1 und am Zentrierelement 2 verhindert).

Figur 5 zeigt den nächsten Stellschritt, bei dem das Stellglied 4 zum Beispiel mit Hilfe eines geeigneten (vergleiche Figur 1 und 3) pneumatischen Antriebs soweit nach unten bewegt wurde, bis der erste Abschnitt 7.1.1 das untere Widerlager 7.2 der Anschlagseinrichtung 7 erreicht. Die besagte Verstellung führt dabei, wie ersichtlich, dazu, dass die beiden Fingerelemente 3, die in Figur 4 noch eingefahren sind, nunmehr ausgefahren werden. Weiterhin zeigt Figur 5, dass in diesem Moment das (mindestens eine) Blockierelement 5.1 (hier also die beiden Kugeln) noch immer eine Relativbewegung zwischen dem Gehäuse 1 und dem Zentrierelement 2 verhindern.

Aus den Figuren 6 und 7 ist ersichtlich, wie eine weitere Betätigung bzw. Verstellung des Stellgliedes 4 nach unten dazu führt, dass sich die beiden Kugeln innerhalb der Führung 2.1 nach innen verschieben, und zwar bedingt durch die sich verengende Schulter zwischen den beiden Bahnabschnitten 6.1 und 6.2. Diese Verschiebung innerhalb der Führung 2.1 ist aufgrund der vorzugsweise hyperboloiden Form des zweiten Abschnitts 7.1.2 des Anschlagselements 7.1 möglich. Außerdem zeigt der Vergleich der Figuren 5 bis 7, wie sich das Zentrierelement 2 innerhalb des Gehäuses 1 nach unten bewegt, und zwar ohne dass sich dabei noch die Fingerelemente 3 bewegen.

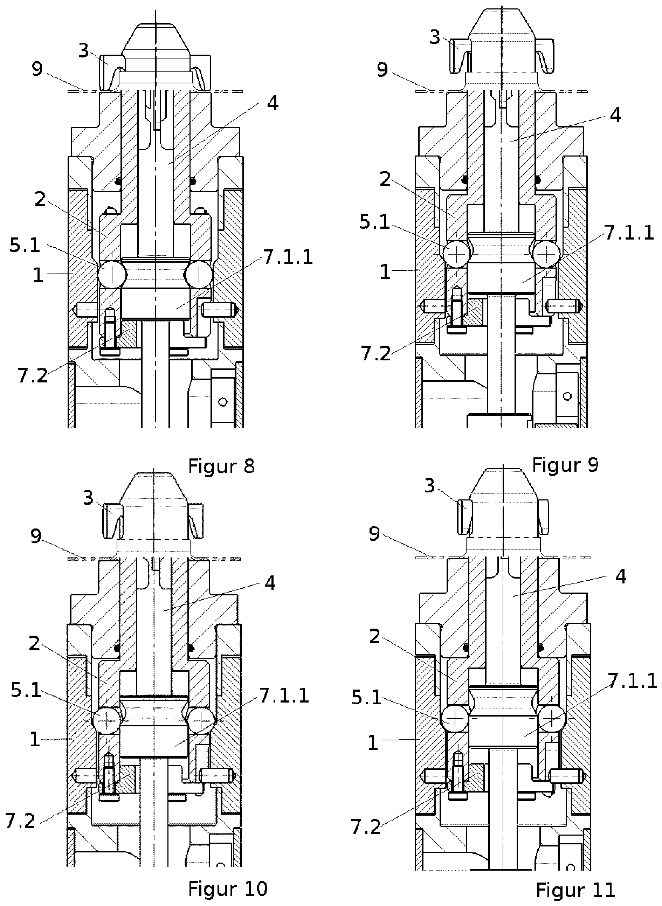

In Figur 8 ist die Spannstellung dargestellt, bei der die umgekehrt hakenförmigen Fingerelemente 3, die also in ausgefahrenem Zustand zentrier- und blockierelementseitig eine Ausnehmung zur Aufnahme eines Kragens 9.1 eines Werkstücks 9 aufweisen, das Werkstück 9 gegen eine entsprechende Auflage am Gehäuse 1 der Zentrierspannvorrichtung pressen. Wie ersichtlich, bewirken die beiden Körper bzw. Kugeln in dieser Position zusammen mit dem ersten Bahnabschnitt 6.1, dass das Zentrierelement 2 und das Stellglied 4 zueinander fixiert sind, sprich eine Relativbewegung zwischen den beiden ausgeschlossen ist.

Wird nun also zu einem anderen Zeitpunkt zum Öffnen der Zentrierspannvorrichtung eine nach oben wirkende Kraft auf das Stellglied 4 aufgebracht, führt dies dazu, dass das Zentrierelement 2 nach oben bewegt wird, und zwar ohne dabei die ausgefahrene Stellung der Fingerelemente 3 zu verändern.

Erst, wenn die Körper bzw. Kugeln in den Bereich des zweiten Bahnabschnitts 6.2 gelangen (vergleiche hierzu Figur 9 und 10) und sich entsprechend nach außen bewegen können, wird nicht nur das Zentrierelement 2 nach oben, sondern auch das Stellglied 4 innerhalb des Zentrierelements 2 verstellt, was dann wiederum dazu führt, dass das Einfahren der Fingerelemente 3 beginnt. Ein Verklemmen der umgekehrt hakenförmigen Fingerelemente 3 mit dem Kragen 9.1 kann auf diese Weise wirkungsvoll verhindert werden.

In Figur 11 ist schließlich noch die Situation dargestellt, in der das Blockierelement 5.1 vollständig in Anlage am ersten Bahnabschnitt 6.1 ist, d. h. der erste Abschnitt 7.1.1 des Anschlagselements 7.1 kann sich frei an den Köpern bzw. Kugeln vorbei bewegen, um so, wie dann wieder in Figur 4 dargestellt, die Fingerelemente 3 vollständig einzufahren.

### Bezugszeichenliste

- 1: Gehäuse
- 2: Zentrierelement
- 2.1: Führung
- 2.2: Führungsraum
- 3: Fingerelement
- 4: Stellglied
- 5: Blockiereinrichtung
- 5.1: Blockierelement
- 6: Führungsbahn
- 6.1: erster Bahnabschnitt
- 6.2: zweiter Bahnabschnitt
- 7: Anschlagseinrichtung
- 7.1: Anschlagselement
- 7.1.1: erster Abschnitt
- 7.1.2: zweiter Abschnitt
- 7.2: Widerlager
- 8: Kulissenführung
- 8.1: passfederartiges Element
- 8.2: Schlitz
- 9: Werkstück
- 9.1: Kragen

## Patentansprüche

1. Zentrierspannvorrichtung, umfassend ein Gehäuse (1), in dem ein Zentrierelement (2) zwischen einer Öffnungsstellung und einer Spannstellung entlang einer Längsachse verschieblich gelagert ist, wobei am Zentrierelement (2) ein quer zur Längsachse zwischen einer eingefahrenen und einer ausgefahrenen Position verschieblich gelagertes Fingerelement (3) vorgesehen ist, wobei das Fingerelement (3) mit einem im Zentrierelement (2) verschieblich gelagerten Stellglied (4) wirkverbunden ist,
**dadurch gekennzeichnet,**
**dass** am Zentrierelement (2) eine entweder bei vollständig eingefahrenem Fingerelement (3) eine Relativbewegung zwischen dem Gehäuse (1) und dem Zentrierelement (2) oder bei vollständig ausgefahrenem Fingerelement (3) eine Relativbewegung zwischen dem Zentrierelement (2) und dem Stellglied (4) ausschließende Blockiereinrichtung (5) vorgesehen ist.

2. Zentrierspannvorrichtung nach Anspruch 1,
**dadurch gekennzeichnet,**
**dass** die Blockiereinrichtung (5) ein quer zur Längsachse verschiebbares Blockierelement (5.1) umfasst.

3. Zentrierspannvorrichtung nach Anspruch 2,
**dadurch gekennzeichnet,**
**dass** am Zentrierelement (2) eine Führung (2.1) für das Blockierelement (5.1) vorgesehen ist.

4. Zentrierspannvorrichtung nach Anspruch 3,
**dadurch gekennzeichnet,**
**dass** eine Länge der Führung (2.1) quer zur Längsachse gesehen kürzer als eine entsprechende Länge des Blockierelements (5.1) ausgebildet ist.

5. Zentrierspannvorrichtung nach einem der Ansprüche 2 bis 4,
**dadurch gekennzeichnet,**
**dass** am Gehäuse (1) eine vorzugsweise parallel zur Längsachse verlaufende und vorzugsweise zwei Bahnabschnitte (6.1, 6.2) aufweisende Führungsbahn (6) für das Blockierelement (5.1) vorgesehen ist, wobei vorzugsweise ein mit dem einen Bahnabschnitt (6.1) in Kontakt stehendes Blockierelement (5.1) eine Relativbewegung zwischen dem Zentrierelement (2) und dem Stellglied (4) zulassend und ein mit dem anderen Bahnabschnitt (6.2) in Kontakt stehendes Blockierelement (5.1) eine solche Bewegung verhindernd ausgebildet ist.

6. Zentrierspannvorrichtung nach einem der Ansprüche 2 bis 5,
**dadurch gekennzeichnet,**
**dass** zur beidseitigen Begrenzung der Verschieblichkeit des Stellgliedes (4) zum Zentrierelement (2) eine Anschlagseinrichtung (7) vorgesehen ist, die aus einem am Stellglied (4) angeordneten Anschlagselement (7.1) und beidseitig des Anschlagselements (7.1) am Zentrierelement (2) angeordneten Widerlagern (7.2) gebildet ist, wobei das Blockierelement (5.1) mit dem Anschlagselement (7.1) zusammenwirkend ausgebildet ist.

7. Zentrierspannvorrichtung nach Anspruch 6,
**dadurch gekennzeichnet,**
**dass** das Zentrierelement (2) zur Führung des Anschlagselements (7.1) einen zylindrischen Führungsraum (2.2) aufweist.

8. Zentrierspannvorrichtung nach Anspruch 6 oder 7,
**dadurch gekennzeichnet,**
**dass** das Anschlagselement (7.1) in Richtung der Längsachse gesehen zwei Abschnitte (7.1.1, 7.1.2) aufweist.

9. Zentrierspannvorrichtung nach Anspruch 7 und 8,
**dadurch gekennzeichnet,**
**dass** der erste Abschnitt (7.1.1) eine zum Führungsraum (2.2) passende zylindrische Außenkontur aufweist.

10. Zentrierspannvorrichtung nach Anspruch 8 oder 9,
**dadurch gekennzeichnet,**
**dass** der zweite Abschnitt (7.1.2) als Hyperboloid ausgebildet ist, wobei vorzugsweise ein größter Durchmesser des Hyperboloiden dem Durchmesser des ersten Abschnitts (7.1.1) entspricht.

## Claims

1. Centering clamping apparatus comprising a housing (1), in which a centering element (2) is mounted to be displaceable along a longitudinal axis between an open position and a clamping position, wherein a finger element (3), mounted to be displaceable between a retracted position and an extended position transversely to the longitudinal axis, is provided on the centering element (2), wherein the finger element (3) is operatively connected to an adjusting member (4), mounted to be displaceable in the centering element (2),
**characterized in that**
a blocking device (5), which either precludes a relative movement between the housing (1) and the centering element (2) when the finger element (3) is fully retracted, or precludes a relative movement between the centering element (2) and the adjusting member (4) when the finger element (3) fully extended, is provided on the centering element (2).

2. Centering clamping apparatus according to claim 1,
**characterized in that**
the blocking device (5) comprises a blocking element (5.1) which is displaceable transversely to the longitudinal axis.

3. Centering clamping apparatus according to claim 2,
**characterized in that**
a guide (2.1) for the blocking element (5.1) is provided on the centering element (2).

4. Centering clamping apparatus according to claim 3,
**characterized in that**
a length of the guide (2.1) is designed to be shorter than a corresponding length of the blocking element (5.1) when viewed transversely to the longitudinal axis.

5. Centering clamping apparatus according to one of claims 2 to 4,
**characterized in that**
a guide path (6) for the blocking element (5.1), running preferably parallel to the longitudinal axis and preferably having two path sections (6.1, 6.2), is provided on the housing (1), wherein one blocking element (5.1) contacting the one path section (6.1) is preferably designed to permit a relative movement between the centering element (2) and the adjusting member (4) and one blocking element (5.1) contacting the other path section (6.2) is preferably designed to prevent such a movement.

6. Centering clamping apparatus according to one of claims 2 to 5,
**characterized in that**
a stop device (7) is provided to limit the displaceability of the adjusting member (4) on both sides to the centering element (2), the stop device (7) being formed from a stop element (7.1), arranged on the adjusting member (4), and abutments (7.2), arranged on the centering element (2) on both sides of the stop element (7.1), wherein the blocking element (5.1) is designed to interact with the stop element (7.1).

7. Centering clamping apparatus according to claim 6,
**characterized in that**
the centering element (2) has a cylindrical guide space (2.2) for guiding the stop element (7.1).

8. Centering clamping apparatus according to claim 6 or 7,
**characterized in that**
the stop element (7.1) has two sections (7.1.1, 7.1.2) when viewed in the direction of the longitudinal axis.

9. Centering clamping apparatus according to claim 7 and 8,
**characterized in that**
the first section (7.1.1) has a cylindrical outer contour matching the guide space (2.2).

10. Centering clamping apparatus according to claim 8 or 9,
**characterized in that**
the second section (7.1.2) is designed as a hyperboloid, wherein a largest diameter of the hyperboloid preferably corresponds to the diameter of the first section (7.1.1).

## Revendications

1. Dispositif de serrage centré, comprenant un boîtier (1), dans lequel un élément de centrage (2) est logé en étant translatable entre une position d'ouverture et une position de serrage le long d'un axe longitudinal, sur l'élément de centrage (2) étant prévu un élément en forme de doigt (3) logé en étant translatable à la transversale de l'axe longitudinal entre une position rentrée et une position sortie, l'élément en forme de doigt (3) étant en liaison active avec un actionneur (4) logé de manière translatable dans l'élément de centrage (2),
**caractérisé en ce que**
sur l'élément de centrage (2) est prévu un système de blocage (5) excluant, soit lorsque l'élément en forme de doigt (3) est totalement rentré un déplacement relatif entre le boîtier (1) et l'élément de centrage (2) ou lorsque l'élément en forme de doigt (3) est totalement sorti, un déplacement relatif entre l'élément de centrage (2) et l'actionneur (4).

2. Dispositif de serrage centré selon la revendication 1,
**caractérisé en ce que**
le système de blocage (5) comprend un élément de blocage (5.1) translatable à la transversale de l'axe longitudinal.

3. Dispositif de serrage centré selon la revendication 2,
**caractérisé en ce que**
sur l'élément de centrage (2) est prévu un guidage (2.1) pour l'élément de blocage (5.1).

4. Dispositif de serrage centré selon la revendication 3,
**caractérisé en ce que**,
considérée à la transversale de l'axe longitudinal, une longueur du guidage (2.1) est conçue en étant plus courte qu'une longueur correspondante de l'élément de blocage (5.1).

5. Dispositif de serrage centré selon l'une quelconque des revendications 2 à 4,
**caractérisé en ce que**
sur le boîtier (1) est prévue une voie de guidage (6) pour l'élément de blocage (5.1) s'écoulant de préférence à la parallèle de l'axe longitudinal et comportant de préférence deux segments de voie (6.1, 6.2), de préférence un élément de blocage (5.1) qui est en contact avec le segment de voie (6.1) étant conçu pour admettre un déplacement relatif entre l'élément de centrage (2) et l'actionneur (4) et un élément de blocage (5.1) qui est en contact avec l'autre segment de voie (6.2) étant conçu pour empêcher un tel déplacement.

6. Dispositif de serrage centré selon l'une quelconque des revendications 2 à 5,
**caractérisé en ce que**
pour limiter de part et d'autre l'aptitude à la translation de l'actionneur (4) vers l'élément de centrage (2), il est prévu un système de butée (7) qui est formé d'un élément de butée (7.1) placé sur l'actionneur (4) et de paliers de butée (7.2) placés de part et d'autre de l'élément de butée (7.1) sur l'élément de centrage (2), l'élément de blocage (5.1) étant conçu pour coopérer avec l'élément de butée (7.1).

7. Dispositif de serrage centré selon la revendication 6,
**caractérisé en ce que**
pour guider l'élément de butée (7.1), l'élément de centrage (2) comporte un espace de guidage (2.2) cylindrique.

8. Dispositif de serrage centré selon la revendication 6 ou 7,
**caractérisé en ce que**
considéré dans la direction de l'axe longitudinal, l'élément de butée (7.1) comporte deux segments (7.1.1, 7.1.2).

9. Dispositif de serrage centré selon la revendication 7 et 8,
caractérisé en en ce que
le premier segment (7.1.1) comporte un contour extérieur cylindrique adapté à l'espace de guidage (2.2).

10. Dispositif de serrage centré selon la revendication 8 ou 9,
**caractérisé en ce que**
le deuxième segment (7.1.2) est conçu sous la forme d'un hyperboloïde, de préférence un diamètre le plus grand de l'hyperboloïde correspondant au diamètre du premier segment (7.1.1).
